# NEUE EUROPÄISCHE PATENTSCHRIFT

(11) **EP 0 608 773 B2**
(45) Veröffentlichungstag und Bekanntmachung des Hinweises auf die Entscheidung über den Einspruch: **20.08.2008**
(45) Hinweis auf die Patenterteilung: 17.06.1998
(21) Anmeldenummer: 94100827.8
(22) Anmeldetag: 21.01.1994
(51) Int. Cl.: C09D 5/02, C08G 18/08

(54) **Verfahren zur Herstellung von wässrigen Überzugsmitteln unter Verwendung von Modulsystemen**
Process for the preparation of aqueous coatings using module systems
Procédé pour la préparation de revêtements aqueux en utilisant des systèmes modulaires

(30) Priorität: 26.01.1993 DE 4301991
(43) Veröffentlichungstag der Anmeldung: 03.08.1994
(73) Patentinhaber: E.I. DU PONT DE NEMOURS AND COMPANY, Wilmington DE 19898 (US)
(72) Erfinder: Brock, Thomas, Dr., D-50354 Hürth (DE); Döbert, Jürgen, D-45549 Sprockhövel (DE)
(74) Vertreter: Gille Hrabal Struck Neidlein Prop Roos

(56) Entgegenhaltungen:
- EP-A- 0 379 158
- EP-A- 0 438 090
- WO-A-92/17546
- WO-A-92/17554
- DE-A- 4 009 000
- US-A- 3 980 602
- US-A- 5 104 922

## Beschreibung

Die Erfindung betrifft ein Verfahren zur Herstellung von wäßrigen Überzugsmitteln mit abstimmbarem optischem Effekt unter Verwendung von Modulsystemen (Mischsystemen). Insbesondere ist es zur Herstellung langzeit-lagerstabiler wäßriger Effekt-Basislacke geeignet, die besonders in der Fahrzeug- und Fahrzeugteilelackierung Anwendung finden können.

In der Fahrzeug- und Fahrzeugteilelackierung setzt sich der Einsatz wasserverdünnbarer Lacksysteme immer mehr durch. Speziell im Bereich der wäßrigen Effekt-Basislacke besteht die Forderung nach einer ständig wachsenden Anzahl von Effekt-Farbtönen, was eine rationelle Fertigung und Lagerung zunehmend erschwert. Ein Weg zur Lösung dieses Problems besteht in der Bereitstellung einer begrenzten Anzahl lagerfähiger Einzelbausteine, die je nach gewünschtem Effektfarbton kurz vor der Applikation zum fertigen, wäßrigen Effekt-Basislack kombiniert werden.

So beschreibt die EP-A-399 427 ein Wasserbasislack-Baukastensystem bestehend aus 5 Bausteinen, die nach Kombination einen fertigen Wasserbasislack ergeben. Dabei ist es erfindungswesentlich, daß der Effektbaustein, der Baustein mit den metallhaltigen Pigmenten, wasserfrei hergestellt und gelagert werden muß. Dies geschieht durch Aufschließen metallischer Pigmente in einem in Lösemittel gelösten Alkyd-, Acrylat- oder Polyesterharz und organischem Lösemittel. So hergestellte Effektbausteine enthalten keine Neutralisationsmittel für saure Harze. Die damit formulierten Wasserbasislacke weisen somit einen unerwünscht hohen Lösungsmittelanteil auf und es ist ein separater Neutralisationsbaustein notwendig. Außerdem erfordert die Fertigung dieser Wasserbasislacke eine strenge Einhaltung in der Reihenfolge beim Vermischen der einzelnen Bausteine.

Weiterhin werden in den EP-A-0 468 293 sowie EP-A-0 471 972 wäßrige Lacke auf Basis von verschiedenen Bausteinen beschrieben. Es ist jedoch erforderlich, daß der Effektbaustein wasserfrei ist.

Die DE-A-41 10 520 beschreibt ein Mischsystem, das geeignet sein soll, wäßrige pigmentierte Beschichtungsmittel mit genau festgelegter Tönung herzustellen. Insbesondere sollen damit Wasserbasislacke hergestellt werden. Das Mischsystem besteht aus verschiedenen Basisfarben (A), die weniger als 5 Gew.-% Wasser enthalten, bevorzugt wasserfrei sind und Pigmente, Lösemittel sowie wasserverdünnbare Bindemittel enthalten, und einer pigmentfreien wäßrigen Komponente (B), die insbesondere wasserverdünnbare Bindemittel und/oder Rheologieadditive enthält. Die in Komponente A enthaltenen wasserverdünnbaren Bindemittel liegen in Lösungsmittelform vor und müssen in Lösungsmittelform darstellbar sein. Die so formulierten Wasserbasislacke weisen deshalb einen unerwünscht hohen Lösemittelanteil auf. Die fertigen Überzugsmittel werden durch Mischen der Komponenten direkt vor der Applikation hergestellt, sie sind nicht lagerstabil.

Aufgabe der Erfindung ist die Bereitstellung eines Verfahrens zur Herstellung von wäßrigen Überzugsmitteln, insbesondere zur Herstellung wäßriger einkomponentiger Effekt-Basislacke mit geringem Lösemittelgehalt unter Verwendung eines Modulsystems bzw. Mischsystems oder Baukastensystems, das über lange Zeit lagerstabil ist, wobei die einzelnen Module des Systems einfach miteinander vermischbar sind, um einen gewünschten Effekt zu erzielen.

Es hat sich gezeigt, daß diese Aufgabe gelöst werden kann durch Verwendung eines Modulsystems, das ein Effektmodul mit einem hohen Wassergehalt enthält.

Ein Gegenstand der Erfindung ist somit ein Verfahren zur Herstellung von wäßrigen Überzugsmitteln mit abstimmbarem Effekt, durch Vermischen von mindestens zwei lagerbeständigen vorgemischten wäßrigen Modulen, das dadurch gekennzeichnet, ist, daß
A) mindestens ein wäßriges, Pigment, bestehend aus einem oder mehreren Effetkpigmenten, ein oder mehrere Effektpigmente, ein oder mehrere wasserverdünnbare anionisch und/oder nicht-ionisch stabilisierte Bindemittel, ein oder mehrere organische Lösemittel, mindestens 20 Gew.-% Wasser, sowie gegebenenfalls lackübliche Additive enthaltendes Effektmodul und wobei das Effektpigment ausschließlich Metallicpigmente enthält, wobei der Metallicpigment-Gehalt 3 bis 13 Gew.-%, bezogen auf das Gesamtgewicht der Bestandteile des Effektmoduls bei einem pigment/Bindemittel-Verhältnis von 0,02:1 bis 10:1, bezogen auf das Festkörpergewicht und bei einem pH-Wert von 7,2 bis 8,0, beträgt, und
B) mindestens ein wäßriges, ein oder mehrere wasserverdünnbare anionisch und/oder nicht-ionisch stabilisierte Bindemittel, Wasser, gegebenenfalls ein oder mehrere organische Lösemittel, sowie gegebenenfalls einen oder mehrere Vernetzer und/oder ein oder mehrere lackübliche Additive enthaltendes Bindemittelmodul miteinander vermischt werden.

Das erfindungsgemäß eingesetzte Modulsystem kann zusätzlich zu dem Effektmodul A) und dem Bindemittelmodul B) beispielsweise enthalten:
C) mindestens ein, ein oder mehrere Pigmente und/oder Füllstoffe, ein oder mehrere anionisch und/oder nicht-ionisch stabilisierte wasserverdünnbare Bindemittel und Wasser, sowie gegebenenfalls ein oder mehrere organische Lösemittel und/oder lackübliche Additive enthaltendes Farbmodul, und/oder
D) mindestens ein, eine oder mehrere organische oder anorganische die Rheologie steuernde Mittel (Rheologiekomponenten) und Wasser, sowie gegebenenfalls ein oder mehrere wasserverdünnbare anionisch und/oder nicht-ionisch stabilisierte Bindemittel und/oder ein oder mehrere organische Lösemittel enthaltendes Rheologiemodul, und/oder
E) mindestens ein, ein oder mehrere Vernetzungsmittel, sowie gegebenenfalls ein oder mehrere organische Lösemittel, Wasser, ein oder mehrere anionisch und/oder nicht-ionisch stabilisierte wasserverdünnbare Bindemittel und/oder ein oder mehrere lackübliche Additive enthaltendes Vernetzermodul.

Unter Modul werden hier lagerstabile getrennt lagerbare Bausteine (Mischbausteine) verstanden, aus denen durch Mischen ein fertiges Überzugsmittel hergestellt werden kann, das gegebenenfalls noch auf Applikationsviskosität eingestellt werden kann. Durch das Vermischen der einzelnen Module können gewünschte abstimmbare Effekte, sowie gegebenenfalls abstimmbare Farbtönungen erhalten werden. Die Module können dem Hersteller beispielsweise in Form eines zumindest die Module A) und B) enthaltenden Baukastens bereitgestellt werden.

Von jedem der Module A) bis E) können verschiedene Ausführungsformen bereitgestellt werden. Auf diese Weise entstehen Modulreihen, die aus einem oder mehreren Modulen bestehen können.

Das Effektmodul A) ist eine wäßrige Zubereitung, die mindestens ein Effektpigment, mindestens ein wasserverdünnbares Harz (Bindemittel) sowie mindestens 20 Gew.-% Wasser, Anteile an organischen Lösemitteln und gegebenenfalls lackübliche Additive enthält.

Als Effektpigmente dienen Metallpigmente, z.B. aus Aluminium, Stahl, Kupfer oder anderen Metallen.

Im Handel ist eine Vielzahl dieser Effektpigmente erhältlich, die sich durch Teilchengröße, Teilchengrößenverteilung und Teilchenform unterscheiden. Je nach gewünschtem Effekt im Lackfilm wird die Auswahl der Pigmente getroffen. Bevorzugt werden Effektmodule mit nur einem Pigment hergestellt. Es sind jedoch auch Effektmodule möglich, die mehrere verschiedene Effektpigmente enthalten.

Überraschenderweise hat sich im Rahmen der Erfindung gezeigt, daß für das erfindungsgemäße Verfahren Metallpigmente enthaltende wäßrige Module bereitgestellt werden können, wobei die Metallpigmente auch aus wasserempfindlichen Metallen, wie Aluminium oder Stahl, bestehen können. Es hat sich gezeigt, daß dies dann möglich ist, wenn die Effektmodule 3 bis 13 Gew.-%, insbesondere 3,5 bis 4 Gew.-% des wasserempfindlichen Metallpigments enthalten. Dabei beträgt der pH-Wert 7,2 bis 8,0, besonders bevorzugt 7,5 bis 8,0. Das Pigment/Bindemittel-Verhältnis beträgt in diesem Falle 0,02 : 1 bis 10 : 1, bezogen auf das Festkörpergewicht. Durch die Bereitstellung derartiger wäßriger Effektmodule auf der Basis von Metallpigmenten kann durch das erfindungsgemäße Verfahren ein Lackmaterial bereitgestellt werden, das einen besonders geringen Lösemittelgehalt aufweist.

Die im Effektmodul enthaltenen wasserverdünnbaren Harze können eine anionische Ladung tragen. Dabei liegen anionische Harze in Form von mit Basen neutralisierten wäßrigen Lösungen oder Dispersionen vor.

Die im Effektmodul enthaltenen wasserverdünnbaren Harze können auch nicht-ionisch stabilisiert sein. Es können beispielsweise solche Harze eingesetzt werden, wie sie später für das Bindemittelmodul B) beschrieben werden.

Im Fall anionischer Harze liegen die anionischen Gruppen bevorzugt als neutralisierte Carboxylgruppen vor, entsprechend einer Säurezahl von bevorzugt 15 - 70 mg KOH/g.

Bei den Harzen handelt es sich um Harze auf Polyurethanbasis, wie bei der Beschreibung der Bindemittelmodulreihe erläutert.

Es können auch wasserverdünnbare oder nichtwasserverdünnbare Vernetzerkomponenten im Effektmodul enthalten sein. Diese Vernetzerkomponenten werden nachfolgend bei der Beschreibung des Vernetzermoduls näher erläutert.

Bevorzugt enthält jedes der wäßrigen Effektpigmentmodule das gleiche Bindemittel oder Bindemittelgemisch. Damit kann auch durch Mischen unterschiedlicher Module eine konstante Bindemittelzusammensetzung erzielt werden.

Weiterhin kann das Effektmodul geringe Anteile mindestens eines wassermischbaren Lösemittels enthalten, wie Alkohole, z.B. Monoalkohole, wie Butanol, n-Propanol, Isopropanol; Etheralkohole, z.B. Butoxyethanol, Butoxypropanol, Methoxypropanol; Dialkohole, wie Glykole, z.B. Ethylenglykol, Polyethylenglykol; Trialkohole, wie Glycerin; Ketone, z.B. Aceton, Methylethylketon, N-Methylpyrrolidon; Ether, z.B. Dipropylenglykoldimethylether.

Bevorzugt enthält das Effektmodul rheologiesteuernde Mittel. Dabei kann es sich um Substanzen oder Gemische handeln, die bei der Herstellung des Rheologiemoduls beschrieben werden. Diese können direkt bei der Herstellung des Effektmoduls zugesetzt werden oder als fertiges Rheologiemodul nachträglich zugemischt werden.

Weiterhin können im wäßrigen Effektmodul lackübliche Additive wie z.B. Netzmittel, Entschäumer, Neutralisationsmittel, Katalysatoren enthalten sein.

Die Herstellung des wäßrigen Effektmoduls erfolgt im allgemeinen so, daß das effektgebende Pigment, z.B. in Form einer handelsüblichen Paste, vorgelegt wird, mit wasserverdünnbarem organischen Lösemittel und Additiven versetzt und anschließend mit der wäßrigen Harzlösung unter Scheren vermischt wird. Pulverförmige Effektpigmente werden zunächst mit Lösungsmittel und Additiven zu einer Paste verarbeitet. Es ist zu beachten, daß plättchenförmige Effektpigmente beim Vermischen nicht mechanisch beschädigt werden.

Es entstehen wäßrige, lagerstabile Effektmodule mit einem Pigment/Bindemittelverhältnis von 0,02 : 1 bis 10 : 1. Bevorzugt beträgt dabei der Festkörpergehalt des gesamten Effektmoduls 10 bis 40 Gew.-%. Das Gewichtsverhältnis von Wasser zu organischem Lösemittel innerhalb des wäßrigen Effektmoduls beträgt bevorzugt 12 : 1 bis 3 : 1. Der Wassergehalt im Effektmodul beträgt mindestens 20, bevorzugt 20 bis 75 Gew.-%.

Das Bindemittelmodul B) ist eine wäßrige Lösung oder Dispersion mindestens eines anionisch und/oder nicht-ionisch stabilisierten wasserverdünnbaren Bindemittels. Es handelt sich dabei um filmbildende Harze oder Pastenharze, wie sie in wäßrigen Überzugsmitteln, insbesondere in wäßrigen Basislacken, üblich sind. Sie können allein oder in Kombination vorliegen. Die filmbildenden Harze können Polyester-, Polyacrylat- oder bevorzugt Polyurethanbasis haben. Sie können selbst- oder fremdvernetzend oder physikalisch trocknend sein.

Beispiele für geeignete nichtionisch stabilisierte Bindemittel sind solche Bindemittel, deren Wasserverdünnbarkeit durch Einbau von Polyethersegmenten in das Harzmolekül erreicht wird. Beispiele für derartig stabilisierte Polyurethan- bzw. Polyurethanacrylatharze sind in den EP-A-354 261, EP-A-422 357 und EP-A-424 705 beschrieben.

Bevorzugt enthält das wäßrige Bindemittelmodul B) anionisch stabilisierte Bindemittel. Beispiele dafür sind (Meth)acrylcopolymere, Polyesterharze oder bevorzugt Polyurethanharze.

Beispiele für geeignete wasserverdünnbare (Meth)acrylcopolymere sind den EP-A-399 427 und EP-A-287 144 zu entnehmen.

Beispiele für geeignete wasserverdünnbare Polyesterharze sind in DE-A-29 26 584, DE-A-38 32 142 und EP-A-301 300 beschrieben.

Es ist auch möglich Gemische solcher Bindemittel einzusetzen. Besonders geeignete Bindemittel sind solche, in denen (Meth)acrylcopolymer und Polykondensationsharz kovalent oder in Form interpenetrierender Harzmoleküle verbunden vorliegen. Beispiele für diese Harze als eine derartige Kombination von (Meth)acrylcopolymer und Polyesterharz sind in der EP-A-226 171 beschrieben.

Beispiele für die besonders bevorzugten anionisch stabilisierten Polyurethanharze sind in der Literatur in großer Vielfalt beschrieben. Es handelt sich dabei um wäßrige Polyurethandispersionen oder -lösungen oder um solche Bindemittel, in denen (Meth)acrylcopolymer und Polyurethanharz kovalent oder in Form interpenetrierender Harzmoleküle verbunden vorliegen. Geeignete PU-Dispersionen sind stabile, wäßrige Dispersionen mit einem Festkörper von 20 bis 50 %. Die Molmasse (M_{W}) der Harze kann in weiten Grenzen schwanken, von 1000 bis 500000, wobei filmbildende Bindemittel im oberen Zahlenbereich liegen, Pastenharze im unteren Zahlenbereich der Molmasse liegen.

Beispiele für Polyurethandispersionen, die durch Kettenverlängerung isocyanatfunktioneller Prepolymerer mit Polyamin und/oder Polyol hergestellt werden können, finden sich in den EP-A-89 497, EP-A-228 003, DE-A-36 28 124 und EP-A-512 524.

Polyurethandispersionen, die durch Kettenverlängerung isocyanatfunktioneller Prepolymerer mit Wasser hergestellt werden können, sind in der DE-A-39 15 459 dargestellt.

Besonders bevorzugte Polyurethandispersionen dieses Typs sind in der noch nicht veröffentlichen P 42 24 617 der gleichen Anmelderin beschrieben. Dabei handelt es sich um selbstemulgierende Polyurethandispersionen, die bevorzugt, bezogen auf ihren Festkörper, im nicht neutralisierten Zustand eine Säurezahl von 5 bis 50, besonders bevorzugt über 10 und unter 30 haben. Das selbstemulgierbare Urethanharz hat bevorzugt eine Glasübergangstemperatur, die unter der Dispergiertemperatur liegt. Die Dispersion kann z.B. so hergestellt werden, daß ein Urethanprepolymer hergestellt wird, indem man ein oder mehrere Polyisocyanate (a), bevorzugt Diisocyanate, mit einem Polyether- oder Polyesterdiol (b1) oder einer Mischung derselben, sowie
gegebenenfalls eine oder mehrere niedermolekulare Polyhydroxylverbindungen (b2) und
eine oder mehrere Dimethylolalkancarbonsäuren (c) in einem NCO/OH-Äquivalentverhältnis von 1,1 - 2,0 : 1, bevorzugt 1,1 - 1,9 : 1,
in einer Ein- oder Mehrstufenreaktion in einem hydrophilen organischen, von aktivem Wasserstoff freien Lösungsmittel umsetzt. Anschließend erfolgt beispielsweise in der organischen Phase eine Kettenverlängerung mit Wasser, wobei pro NCO-Gruppe beispielsweise 0,5 bis 3 Mole Wasser eingesetzt werden. Das so erhaltene Polymere kann nach oder während seiner Neutralisation mit einem Amin in weiterem Wasser emulgiert und das organische Lösemittel, falls erforderlich, abdestilliert werden.

Beispiele für Polyurethandispersionen, die durch Kettenverlängerung von gegenüber Polyisocyanaten reaktiven, aktiven Wasserstoff enthaltenden PU-Prepolymeren mit Polyisocyanaten hergestellt werden, sind den DE-A-39 03 804 und DE-A-40 01 841 zu entnehmen.

Weitere anionisch stabilisierte Polyurethan (PU)-Dispersionen sind in der noch nicht veröffentlichten P 42 28 510 der gleichen Anmelderin beschrieben. Dabei handelt es sich um wäßrige Polyurethanharzdispersionen, die erhältlich sind durch Kettenverlängerung von
- einem oder mehreren Polyurethanharzen, die mindestens eine CH-acide Gruppe im Molekül enthalten, durch Umsetzung in wäßrigem oder nichtwäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

Bevorzugt werden die Dispersionen lösemittelfrei hergestellt. Bevorzugt enthalten die Bindemittel noch reaktive funktionelle Gruppen.

Das Polyurethanharz, das mindestens eine CH-acide Gruppe enthält, kann dabei auf verschiedene Weise hergestellt werden. Derartige CH-acide PU-Harze sind beispielsweise in der EP-A-0 367 051 beschrieben.

Ein weiterer Weg zur Herstellung einer Dispersion derartiger Polyurethanharze verläuft durch Umsetzung von einem Hydroxylgruppen enthaltenden Polyurethanharz mit mindestens einer ionischen Gruppe, das Harnstoffgruppierungen enthalten kann, in wasserfreiem Milieu, mit mindestens einer Verbindung, die mindestens eine zur Reaktion mit zumindest einem Teil der OH-Gruppen des Polyurethanharzes geeignete funktionelle Gruppe aufweist und darüber hinaus eine CH-acide Gruppe enthält und Überführen des erhaltenen Produkts nach Neutralisation in die wäßrige Phase.

Die Dispersionen werden vor oder nach der Überführung in die Wasserphase kettenverlängert mit einer Verbindung, die mit zwei CH-aciden Funktionen reagieren kann. Bevorzugt wird die Kettenverlängerung jedoch in der wäßrigen Dispersion durchgeführt.

Zur Kettenverlängerung geeignet sind Verbindungen, die mit CH-aciden Zentren reagieren können. Dabei muß mindestens eine zweifache Reaktionsmöglichkeit gegeben sein. Beispiele für solche Verbindungen sind Aldehyde oder Di- oder Polyisocyanate. Die geeigneten Kettenverlängerungsreagentien können einzeln oder in Kombination eingesetzt werden.

Beispiele für anionisch stabilisierte Polyurethan-basierende Bindemittel, die als Bestandteil des wäßrigen Bindemittelmoduls geeignet sind, in denen (Meth)acrylcopolymer und Polyurethanharz kovalent oder in Form interpenetrierender Harzmoleküle verbunden vorliegen, sind z.B. in den EP-A-353 797, EP-A-297 576, DE-A-41 22 265 und DE-A-41 22 266 beschrieben. Es handelt sich um Polymerhybride, die durch Emulsionspolymerisation radikalisch polymerisierbarer Monomerer in Gegenwart von anionisch stabilisierten Polyurethanen, die gegebenenfalls auch ungesättigt funktionalisiert sind, hergestellt werden.

Bevorzugt sind dabei die in der DE-A-41 22 265 beschriebenen Polyurethanbasierenden Bindemittel dieses Typs.

Es handelt sich um Polyurethan-Dispersionen, hergestellt durch radikalisch initiierte Polymerisation von Polyurethan-Makromonomeren mit einem Gehalt an Carboxyl-, Phosphonsäure- oder Sulfonsäuregruppen und lateralen Vinylgruppen, sowie gegebenenfalls terminalen Vinylgruppen, Hydroxyl-, Urethan-, Thiourethan- und/oder Harnstoffgruppen.

Diese Polyurethan-Dispersionen können im Prinzip auf verschiedenen Wegen hergestellt werden. Ein Weg besteht z.B. darin, daß ein Polyadditionsprodukt hergestellt wird durch Polyaddition von Polyhydroxy-Verbindungen aus der Gruppe Polyhydroxy-polyether, Polyhydroxy-polyester oder Polyhydroxypolycarbonate, weiterhin Polyhydroxycarbonsäuren, Dihydroxyphosphonsäuren oder Polyhydroxysulfonsäuren, sowie Polyisocyanaten und einem mindestens zwei Hydroxy- sowie mindestens eine Vinylgruppe enthaltenden Monomeren. Die Mengenverhältnisse der Reaktanten, insbesondere an Polyisocyanat, werden so gewählt, daß ein Makromonomer mit terminalen Hydroxylgruppen entsteht. Dieses Makromonomer, das außerdem Carboxyl-, Phosphonsäureoder Sulfonsäuregruppen und laterale Vinylgruppen enthält, wird dann neutralisiert, falls die sauren Gruppen in den Monomeren, die solche Gruppen tragen, nicht bereits von vornherein in neutralisierter Form eingesetzt wurden.

Zur Herstellung der Polyurethan-Dispersionen werden die so erhaltenen Makromonomeren, die Vinylgruppen enthalten, durch Zugabe von Wasser in eine wäßrige Dispersion überführt und nach an sich bekannten Methoden durch radikalisch initiierte Polymerisation polymerisiert. Bei dieser Polymerisation können, falls nicht von vornherein als sogenannte Reaktivverdünner vorhanden, Monomere zugegeben werden, die dann in das Polyurethan mit einpolymerisiert werden.

Bei diesen Monomeren handelt es sich um alpha,beta-ungesättigte Monomere. Beispiele hierfür sind alpha,beta-ungesättigte Vinylmonomeren wie Alkylacrylate, -methacrylate und -crotonate mit 1 bis 20 Kohlenstoffatomen im Alkylrest, Di-, Tri-, und Tetraacrylate, -methacrylate, -crotonate von Glykolen, tri- und tetrafunktionellen Alkoholen, substituierte und unsubstituierte Acryl- und Methacrylamide, Vinylether, alpha,beta-ungesättigte Aldehyde und Ketone, Vinylalkylketone mit 1 bis 20 Kohlenstoffatomen im Alkylrest, Vinylether, Vinylester, Diester von alpha,betaungesättigten Dicarbonsäuren, Styrol, Styrolderivate, wie z.B. alpha-Methylstyrol.

Im erfindungsgemäß eingesetzten wäßrigen Bindemittelmodul B) sind ebenfalls als anionisch stabilisierte PU-Harze die oben erwähnten Polyurethanpastenharze, z.B. aus DE-A-40 00 889, einsetzbar. Dabei handelt es sich um OH-gruppenhaltige urethanisierte ölfreie Polyester, hergestellt durch Umsetzung von Diisocyanat mit einem Polyolgemisch im Überschuß sowie niedrigmolekularen Dialkoholen, wovon ein Teil zusätzlich mindestens eine zur Anionenbildung befähigte Säuregruppe enthält. Das Zahlenmittel der Molmasse dieser PU-Bindemittel liegt bevorzugt bei 3000 bis 200000, besonders bevorzugt unter 50000.

Das zur Herstellung wäßriger Effektbasislacke notwendige Bindemittelmodul B) kann aus einem wäßrigen Bindemittel bestehen. Die wäßrigen Bindemittel können aber auch in Kombination vorliegen. Dabei werden die Bindemittel jeweils getrennt hergestellt und danach als Einzelmodul gelagert oder es wird eine Mischung der Bindemittel hergestellt und dann als Mehrkomponenten-Bindemittelmodul gelagert.

Bevorzugt enthält das Bindemittelmodul B) wäßrige Bindemittel auf Basis anionisch stabilisierter Polyurethane. Es kann zweckmäßig sein, wenn ein Teil, z.B. bis zu 50 Gew.-%, der PU-Bindemittel durch Harze auf Basis einer Kombination aus (Meth)acrylcopolymer und Polyesterharz ersetzt werden.

Weiterhin kann das Bindemittelmodul B) wasserverdünnbare Bindemittel auf Cellulosebasis enthalten.

Das wäßrige Bindemittelmodul B) kann weiterhin Aminoplastharze und/oder blockierte Polyisocyanate enthalten. Die Aminoplastharze und die blockierten Polyisocyanate können wasserverdünnbar oder nicht wasserverdünnbar sein und werden bei der Beschreibung des Vernetzermoduls erläutert. Sie liegen in einem Verhältnis zum wasserverdünnbaren Bindemittel von 40 : 60 bis 5 : 95 vor, jeweils bezogen auf Festharz.

Zusätzlich können rheologiesteuernde Mittel enthalten sein. Weiterhin kann das wäßrige Bindemittelmodul geringe Anteile von üblichen Lösemitteln enthalten, bevorzugt weniger als 5 Gew.-%. Diese können beispielsweise die für das Effektmodul beschriebenen wassermischbaren Lösemittel sein. Der Festkörpergehalt des Bindemittelmoduls beträgt bevorzugt 20 bis 60 Gew.-%.

Das Bindemittelmodul B) kann Neutralisationsmittel für die anionischen Harze enthalten. Hierzu dienen Basen. Beispiele sind Ammoniak oder organische Amine wie Triethylamin, N-Methylmorpholin, Aminoalkohole wie Dimethylisopropanolamin, Dimethylethanolamin, 2-Amino-2-Methylpropanol-1.

Anionische Harze enthaltende wäßrige Bindemittelmodulbausteine besitzen pH-Werte von 7,0 - 8,5. Das Verhältnis von organischem Lösemittel zu Wasser innerhalb des wäßrigen Bindemittelmoduls beträgt bis zu 0,3 : 1, bevorzugt unter 0,2 : 1.

Das erfindungsgemäß verwendete Modulsystem (aus den Modulen A) und B)) kann zusätzlich mindestens ein wäßriges Farbmodul C) umfassen, das neben mindestens einem anionisch und/oder nicht-ionisch stabilisiertem wasserverdünnbaren Bindemittel Farbpigmente und/oder Füllstoffe und gegebenenfalls Additive enthält. Bevorzugt enthält jedes Farbmodul C) nicht mehr als 4 verschiedene Farbpigmente und/oder Füllstoffe, besonders bevorzugt handelt es sich um nur ein Farbpigment oder nur einen Füllstoff enthaltende wäßrige Farbmodule. Beispiele für im Farbmodul einsetzbare anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente.

Als wasserverdünnbare anionisch und/oder nicht-ionisch stabilisierte Harze können die gleichen eingesetzt werden, wie bei dem Bindemittelmodul beschrieben. Es handelt sich bevorzugt um anionische Ladungen tragende Bindemittel, die als Bindemittelkomponente der fertigen wäßrigen Effekt-basislacke dienen. Die Harze können Polyester-, Acrylat- oder Polyurethanbasis haben. Es kann sich bei den Harzen um Pastenharze allein oder in Kombination mit filmbildenden Bindemitteln oder Vernetzern handeln. Besonders bevorzugt werden PU-Pastenharze, wie in DE-A-40 00 889 beschrieben, eingesetzt.

Bevorzugt enthält jedes wäßrige Farbmodul C) das gleiche Bindemittel oder Bindemittelgemisch. Es können zusätzlich wasserverdünnbare oder nicht wasserverdünnbare Vernetzerkomponenten im Farbmodul enthalten sein.

Weiterhin kann das Farbmodul C) geringe Anteile von wassermischbaren Lösungsmitteln enthalten. Ebenso können Basen als Neutralisationsmittel enthalten sein. Es kann günstig sein, wenn das Farbmodul C) rheologiesteuernde Mittel enthält. Weiterhin können im wäßrigen Farbmodul C) lackübliche Additive wie z.B. Netzmittel, Entschäumer, Verlaufsmittel enthalten sein.

Die Herstellung des wäßrigen Farbmoduls C) erfolgt im allgemeinen so, daß das Farbpigment oder der Füllstoff in einem Teil der wäßrigen Bindemittel oder bevorzugt im Pastenharz angerieben wird. Dies geschieht in üblichen, dem Fachmann bekannten Aggregaten. Danach wird mit dem restlichen Anteil der wasserverdünnbaren Harze komplettiert. Es kann sich dabei um die selben oder auch um verschiedene Bindemittel, wie in der Dispergierstufe eingesetzt, handeln.

Es entstehen wäßrige, lagerstabile Farbmodule C) mit einem Pigment/Bindemittelverhältnis von 0,01 : 1 bis 10 : 1. Der Festkörpergehalt liegt bevorzugt bei 20 bis 80 Gew.-%.

Anionische Harze enthaltende wäßrige Farbmodule besitzen pH-Werte von 7,0 bis 10,0. Das Verhältnis von organischem Lösemittel zu Wasser im wäßrigen Farbmodul beträgt bis 0,3 : 1, bevorzugt bis zu 0,2 : 1.

Das erfindungsgemäß verwendete Modulsystem kann ein Rheologiemodul D) enthalten. Dieses enthält Wasser und als Rheologiekomponente eine oder mehrere das Fließverhalten des fertigen wäßrigen Effektbasislacks steuernde Substanzen.

Beispiele dafür sind Polymermikroteilchen, wie sie beispielsweise in der EP-A-38 127 beschrieben sind, anorganische Schichtsilikate, z.B. Aluminium-Magnesium-Silikat, Natrium-Magnesium-Schichtsilikate und Natrium-Magnesium-Fluorlithium-Schichtsilikate des Montmorillonittyps, Assoziativverdicker, z.B. auf Polyurethanbasis oder Cellulosebasis, Polyvinylalkohol, synthetische Polymere mit ionischen Gruppen wie z.B. Poly(meth)acrylsäure. Diese Substanzen sind im Handel in vielfältiger Form erhältlich.

Das erfindungsgemäß verwendete Modulsystem kann auch ein Vernetzermodul E) enthalten. Das Vernetzermodul E) wird insbesondere dann eingesetzt, wenn der zu fertigende wäßrige Effektbasislack unter Verwendung solcher Harze hergestellt wird, die vernetzbare Gruppen im Molekül enthalten.

Beispiele für im Vernetzermodul enthaltene Vernetzerharze sind Aminoplastharze und/oder blockierte Isocyanate. Es handelt sich um teilweise oder vollständig veretherte Amin-Formaldehyd-Kondensationsharze und/oder blockierte Polyisocyanate mit mindestens zwei reaktiven Stellen pro Molekül.

Solche Aminoplastharze sind beispielsweise beschrieben in Ullmann "Encyclopedia of Industrial Chemistry", 5. Auflage, Vol. A2, Kapitel "Aminoresins", Seiten 115 - 141 (1985) und Houben-Weyl, "Methoden der Organischen Chemie", Band 14/2, Seiten 319 - 388 (1962). Die Harze werden nach dem Stand der Technik hergestellt und von vielen Firmen als Verkaufsprodukte angeboten.

Beispiele für solche Aminoplastharze sind Amin-Formaldehyd-Kondensationsharze, die durch Reaktion von Aldehyden mit Melamin, Guanamin, Benzoguanamin oder Dicyandiamid entstehen. Die Alkoholgruppen der Aldehyd-Kondensationsprodukte werden dann teilweise oder vollständig mit Alkoholen verethert.

Beispiele für blockierte Isocyanate sind beliebige Di- und/oder Polyisocyanate, bei denen die Isocyanatgruppen mit einer Verbindung umgesetzt worden sind, die aktiven Wasserstoff enthält. Als Di- und/oder Polyisocyanate können auch entsprechende isocyanatgruppenhaltige Prepolymere verwendet werden. Die organischen Di- und/oder Polyisocyanate weisen eine mittlere Molmasse von 112 bis 2000, zweckmäßig eine mittlere Isocyanatfunktionalität von 2 bis 8 auf. Es handelt sich z.B. um aliphatische, cycloaliphatische, aromatische, gegebenenfalls auch sterisch gehinderte Polyisocyanate. Als Polyisocyanate sind besonders gut die sogenannten "Lackpolyisocyanate" geeignet, die aus bekannten Diisocyanaten hergestellt werden.

Typische Beispiele für derartige Polyisocyanate sind Propylendiisocyanat, Tetramethylxylylendiisocyanat, Trimethylendiisocyanat, Hexamethylendiisocyanat, Trimethylhexandiisocyanat, Cyclohexan-1,3- und 1,4-diisocyanat, Methylcyclohexandiisocyanat, 4,4'-Diphenylmethandiisocyanat, Isophorondiisocyanat oder Dicyclohexylmethandiisocyanat.

Gut einsetzbare Isocyanate sind auch die Urethangruppen aufweisenden Polyisocyanate, die beispielsweise durch Umsetzung von überschüssigen Mengen an Diisocyanat mit einfachen mehrwertigen Alkoholen der Molmasse 62 bis 300, insbesondere Trimethylolpropan, erhalten werden können.

Niedermolekulare Verbindungen zum Blockieren von NCO-Gruppen sind bekannt. Beispiele dafür sind aliphatische oder cycloaliphatische Alkohole, Dialkylaminoalkohole, Oxime, Lactame, Imide, Hydroxyalkylester, Malonsäure- oder Acetessigsäureester.

Das Vernetzermodul kann den Vernetzer allein enthalten; jedoch können auch ein oder mehrere organische Lösemittel, Wasser, ein oder mehrere anionisch und/oder nicht-ionisch stabilisierte, wasserverdünnbare Bindemittel und/oder ein oder mehrere lackübliche Additive enthalten sein. Es handelt sich beispielsweise um die gleichen, wie sie für die anderen Module beschrieben sind.

Die verschiedenen Module sind lagerstabil. Sie können erfindungsgemäß als Modulsystem verwendet werden. Weiterhin ist es möglich, mehrere gleiche oder unterschiedliche Module zu neuen lagerstabilen Kombinationsmodulen zu mischen. Beispielsweise können verschiedene Effekt- und/oder Farbmodule gemischt werden. Ebenso können Vernetzermodul und Bindemittelmodul gemischt werden. Ebenso kann das Rheologiemodul mit dem Effekt- oder Farbmodul gemischt werden. Es hat sich als zweckmäßig gezeigt, ein Modulsystem zum Abmischen von Überzugsmitteln zu wählen, bei dem Effektmodul und Bindemittelmodul sowie gegebenenfalls Farbmodul getrennt gehalten werden. Rheologie- und/oder Vernetzermodul können getrennt oder auch vermischt mit den anderen Modulbausteinen vorliegen.
Die erfindungsgemäße Herstellung der wäßrigen einkomponentigen Effektbasislacke erfolgt durch einfaches Vermischen des Effektmoduls mit dem Bindemittelmodul und gegebenenfalls dem Farbmodul und/oder dem Rheologiemodul und/oder dem Vernetzermodul. Dabei ist die Reihenfolge der Zugabe beliebig, bevorzugt werden jedoch die Module mit den höchsten Viskositäten und dem größten Volumenanteil vorgelegt. Nach dem Vermischen kann durch Zugabe von deionisiertem Wasser auf Applikationsviskosität eingestellt werden.

Der fertige erfindungsgemäß hergestellte Effektbasislack hat bevorzugt Festkörpergehalte von 10 - 40 Gew.-%, besonders bevorzugt von 15 - 30 Gew.-%, bei einem Pigment-/Bindemittelverhältnis von 0,06 : 1 bis 0,6 : 1. Die Harzzusammensetzung innerhalb des Lackfestkörpers ist dabei in jedem einzelnen Effektbasislack bevorzugt konstant, wobei im Falle solcher Effektbasislacke, die Vernetzerharze enthalten, innerhalb der Festharzzusammensetzung ein Verhältnis von filmbildenden Bindemittel zu Vernetzerharzen von 95 : 5 bis 60 : 40 gegeben ist.

Der Lösemittelanteil beträgt unter 20 Gew.-%, bevorzugt unter 10 Gew.-%. Der pH-Wert der wäßrigen Basislacke ergibt sich aus den Modulbausteinen durch Mischung. Dabei ist eine Korrektur des pH-Werts im allgemeinen nicht notwendig.

Die fertigen wäßrigen Effektbasislacke können direkt nach dem Vermischen appliziert werden, sie können jedoch auch länger als 12 Monate gelagert werden.

Die erfindungsgemäß hergestellten wäßrigen Effektbasislacke können nach üblichen Methoden appliziert werden. Bevorzugt werden sie durch Spritzen in einer Trockenschichtdicke von 10 - 25 µm appliziert und im Naß-in-Naß-Verfahren verarbeitet, das heißt nach einer Ablüftphase bei 20 - 80°C werden sie mit einem üblichen Klarlack in einer Trockenschichtdicke von bevorzugt 30 - 60 µm überlackiert und gemeinsam mit diesem bei Temperaturen zwischen 20 und 140°C getrocknet oder vernetzt.

Die so erhaltenen Mehrschichteffektlackierungen entsprechen den heute üblichen Anforderungen in der Kraftfahrzeuglackierung. Die erfindungsgemäß hergestellten wäßrigen Effektbasislacke sind somit geeignet für die Fahrzeugerstlackierung und -reparaturlackierung, sie können jedoch auch in anderen Bereichen, wie z.B. der Kunststofflackierung, insbesondere Fahrzeugteilelackierung, eingesetzt werden.

Das erfindungsgemäß eingesetzte Modulsystem besteht aus einzelnen lagerstabilen Modulen. Die Module enthalten filmbildende Bindemittel, die in Lösemittelform oder in wäßriger Phase herstellbar sind. Mit dem erfindungsgemäß eingesetzten Modulsystem lassen sich lösemittelarme, wäßrige Effektbasislacke, die eine gute Langzeitlagerstabilität besitzen, herstellen. Insbesondere wird eine rationalisierte Lagerung und Fertigung der wäßrigen Effektbasislacke erreicht.

Die folgenden Beispiele erläutern die Erfindung. Alle Teile (T) beziehen sich auf das Gewicht.

### Beispiel 1

### Herstellung einer PU-Dispersion gemäß der noch nicht veröffentlichten DE-Patentanmeldung P 42 24 617, Herstellungsbeispiel 3:

In einem Reaktionsgefäß mit Rührer, Innenthermometer, Heizung und Rückflußkühler werden 1005 g eines linearen Polyesters (aufgebaut aus Adipinsäure, Isophthalsäure und Hexandiol mit einer OH-Zahl von 102) auf 90°C erwärmt und bei dieser Temperatur 1,8 g Trimethylolpropan sowie 393 g Isophorondiisocyanat zugesetzt. Diese Temperatur wird gehalten bis die NCO-Zahl 3,8 beträgt. Nach Abkühlen auf 60°C werden eine Lösung aus 35,3 g Dimethylolpropionsäure, 26,1 g Triethylamin und 250 g N-Methylpyrrolidon zugegeben. Nach Erwärmen auf 80°C wird gehalten, bis eine NCO-Zahl von 1,5 erreicht ist. Es wird mit der molaren Menge entionisiertem Wasser gemischt und die Lösung wird bei 80°C gehalten, bis kein Isocyanat mehr nachweisbar ist. Anschließend wird mit soviel Wasser verdünnt, bis eine flüssige Dispersion mit 34 Gew.-% Festkörper entsteht.

### Beispiel 2

### Herstellung eines Effektmoduls A

Folgende Bestandteile sind im Effektmodul enthalten:

| | |
|---|---|
| 32,0 | Teile einer üblichen Polyurethandispersion (gemäß DE-A-4122265, Beispiel 1) mit 35 % FK (FK = Festkörpergehalt), |
| 13,4 | Teile einer handelsüblichen für Wasserbasislack geeigneten Aluminiumpaste mit 60 % Aluminium, |
| 1,3 | Teile eines Aluminium-Benetzungsadditivs auf Basis organischer Phosphorsäurederivate, |
| 7,7 | Teile n-Butanol, |
| 3,3 | Teile eines handelsüblichen Verdickers auf Polyacrylsäurebasis, |
| 3,3 | Teile N,N-Dimethylethanolamin. |

Die Aluminiumpaste wird vorgelegt und mit dem Lösemittel und den Additiven angepastet. Anschließend wird das Bindemittel dazugegeben und gut vermischt.

### Beispiel 3

### Herstellung eines Effektmoduls B

Analog zu Beispiel 2 werden 35 Teile der PU-Dispersion aus Beispiel 1, 20 Teile der Aluminiumpaste aus Beispiel 2, 2 Teile des Benetzungsadditivs aus Beispiel 2, 25 Teile Butylglykol, 1,8 Teile des Verdickers aus Beispiel 2 und 0,2 Teile N,N-Dimethylethanolamin verarbeitet. Danach wird mit 16 Teilen deionisierten Wassers verdünnt.

### Beispiel 4

### Herstellung eines Bindemittelmoduls A

Nachfolgend genannte Bestandteile werden unter Rühren gut miteinander vermischt:

| | |
|---|---|
| 42,0 | Teile einer üblichen Polyurethandispersion (gemäß DE-A-4122265, Beispiel 1) mit 35 % FK, |
| 47,0 | Teile vollentsalztes Wasser, |
| 2,3 | Teile n-Butanol, |
| 6,0 | Teile Butylglykol, |
| 1,4 | Teile eines handelsüblichen Verdickers auf Polyacrylsäurebasis, |
| 1,3 | Teile N,N-Dimethylethanolamin. |

### Beispiel 5

### Herstellung eines Bindemittelmoduls B

Analog zu Beispiel 4 werden 26,2 Teile der PU-Dispersion aus Beispiel 8,8 Teile Hexamethoxymethylmelamin, 5 Teile n-Butanol, 3,5 Teile des Verdickers aus Beispiel 2, 0,25 Teile N,N-Dimethylethanolamin und 56,25 Teile deionisiertes Wasser gut vermischt.

### Beispiel 6

### Herstellung eines blauen Farbmoduls A

Das Farbmodul enthält folgende Bestandteile:

| | |
|---|---|
| 42,0 | Teile eines üblichen Polyurethanpastenharzes (gemäß DE-A-4000889) mit 30 % FK, |
| 34,0 | Teile eines handelsüblichen blauen Kupferphthalocyanin-Pigmentes, |
| 5,0 | Teile eines Dispergierhilfsmittels (Disperse Ayd W22), |
| 18,85 | Teile vollentsalztes Wasser |
| 0,15 | Teile N,N-Dimethylethanolamin. |

Zunächst wird das Pigment in einem Gemisch aus Additiven und etwa der Hälfte des Pastenharzes angerieben. Danach werden das restliche Pastenharz, Amin und Wasser zugegeben und gut vermischt.

### Beispiel 7

### Herstellung eines grünen Farbmoduls B

Analog zu Beispiel 6 wurden 45 Teile des Pastenharzes aus Beispiel 6, 30 Teile eines handelsüblichen grünen Phthalocyaninpigmentes, 5 Teile des Dispergierhilfsmittels aus Beispiel 6, 2 Teile Butylglykol, 17,9 Teile deionisiertes Wasser und 0,1 Teile N,N-Dimethylethanolamin verarbeitet.

### Beispiel 8

### Herstellung von wäßrigen Effekt-Basislacken

Durch gleichmäßiges Vermischen der in der Tabelle angegebenen Module wurden lagerstabile, wäßrige Effektbasislacke hergestellt:

| EFFEKTWASSERBASISLACKE | | | | |
|---|---|---|---|---|
| | A (Silber-Metallic) | B (Silber-Metallic) | C (Blau-Metallic) | D (Grün-Metallic) |
| Bindemittel-Modul A | 70 T | | 60 T | |
| Bindemittel-Modul B | | 80 T | | 75 T |
| Effektmodul A | 30 T | | 20 T | |
| Effektmodul B | | 20 T | | 15 T |
| Farbmodul A | | | 20 T | |
| Farbmodul B | | | | 10 T |
| T = Gewichtsteile | | | | |

## Patentansprüche

1. Verfahren zur Herstellung von wässrigen Überzugsmitteln mit abstimmbarem optischem Effekt, durch Vermischen von mindestens zwei lagerbeständigen, vorgemischten wässrigen Modulen, **dadurch gekennzeichnet, dass**
A) mindestens ein wässriges Pigment, bestehend aus einem oder mehreren Effektpigmenten, ein oder mehrere anionisch und/oder nicht-ionisch stabilisierte wasserverdünnbare Bindemittel auf der Basis von Polyurethanharzen, ein oder mehrere organische Lösemittel, mindestens 20 Gew.-% Wasser, sowie gegebenenfalls lackübliche Additive enthaltendes Effektmodul, und wobei das Effektpigment ausschließlich Metallicpigmente enthält, wobei der Metallicpigment-Gehalt 3 bis 13 Gew.-%, bezogen auf das Gesamtgewicht der Bestandteile des Effektmoduls bei einem Pigment/Bindemittel-Verhältnis von 0,02:1 bis 10:1, bezogen auf das Festkörpergewicht und bei einem pH-Wert von 7,2 bis 8,0, beträgt, und
B) mindestens ein wässriges, ein oder mehrere anionisch und/oder nicht-ionisch stabilisierte wasserverdünnbare Bindemittel, Wasser, sowie gegebenenfalls ein oder mehrere organische Lösemittel, einen oder mehrere Vernetzer und/oder lackübliche Additive enthaltendes Bindemittelmodul, miteinander vermischt werden.

2. Verfahren nach Anspruch 1, **dadurch gekennzeichnet, dass** man ein Effektmodul A) verwendet, das Metallicpigmente und/oder Interferenzpigmente als Effektpigmente enthält.

3. Verfahren nach Anspruch 1, **dadurch gekennzeichnet, dass** das Effektmodul Metallicpigmente auf der Basis wasserempfindlicher Metalle, wie Aluminium und Stahl, enthält.

4. Verfahren nach Anspruch 1 oder 3, **dadurch gekennzeichnet, dass** man ein Effektmodul auf der Basis eines oder mehrere anionisch stabilisierter Bindemittel verwendet.

5. Verfahren nach einem der vorhergehenden Ansprüche, **dadurch gekennzeichnet, dass** man mit mehreren Effektmodulen arbeitet, die jeweils das gleiche Bindemittel oder Bindemittelgemisch enthalten.

6. Verfahren nach einem der vorhergehenden Ansprüche, **dadurch gekennzeichnet, dass** man ein oder mehrere Effektmodule mit einem Wassergehalt von mindestens 50 Gew.-% verwendet.

7. Verfahren nach einem der vorhergehenden Ansprüche, **dadurch gekennzeichnet, dass** das Effektmodul A) und/oder das Bindemittelmodul B) ein oder mehrere Bindemittel auf der Basis von Polyurethanharzen enthält.

8. Verfahren nach einem der vorhergehenden Ansprüche, **dadurch gekennzeichnet, dass** man zusätzlich zum Effektmodul A) und zum Bindemittelmodul B) verwendet:
C) mindestens ein, ein oder mehrere Pigmente und/oder Füllstoffe, ein oder mehrere anionisch und/oder nicht-ionisch stabilisierte wasserverdünnbare Bindemittel, Wasser, sowie gegebenenfalls ein oder mehrere organische Lösemittel und/oder lackübliche Additive enthaltendes Farbmodul, und/oder
D) mindestens ein, eine oder mehrere organische oder anorganische die Rheologie steuernde Mittel und Wasser, sowie gegebenenfalls ein oder mehrere anionisch und/oder nicht-ionisch stabilisierte wasserverdünnbare Bindemittel und/oder ein oder mehrere organische Lösemittel enthaltendes Rheologiemodul, und/öder
E) mindestens ein, ein oder mehrere Vernetzungsmittel, sowie gegebenenfalls ein oder mehrere organische Lösemittel, Wasser, ein oder mehrere anionisch und/oder nicht-ionisch stabilisierte wasserverdünnbare Bindemittel und/oder lackübliche Additive enthaltendes Vernetzermodul.

9. Verfahren nach Anspruch 8, **dadurch gekennzeichnet, dass** das Farbmodul C) einen Festkörpergehalt von 20 bis 80 Gew.-% aufweist.

10. Verfahren nach einem der Ansprüche 9 oder 10, **dadurch gekennzeichnet, dass** das Vernetzermodul E) ein oder mehrere blockierte isocyanate und/oder ein oder mehrere Aminoplastharze als Vernetzungsmittel enthält.

11. Verfahren nach einem der vorhergehenden Ansprüche, **dadurch gekennzeichnet, dass** man die Module In derartigen Mengenverhältnissen vermischt, dass das entstehende Überzugsmittel weniger als 20 Gew.-% organische Lösemittel enthält.

## Claims

1. Process for preparing aqueous surface coating agents with adjustable optical effects, by mixing at least two storage-stable, premixed aqueous modules, **characterized in that**
A) at least one aqueous effect module which contains pigments, consisting of at least one or more effect pigments, one or more anionic and/or non-ionic stabilized water-dilutable binders on the basis of polyurethane resins, one or more organic solvents, at least 20 wt.% water and optionally conventional lacquer additives, and wherein the effect module contains exclusively metallic pigments, wherein the metallic pigment concentration is 3 to 13 wt.%, with respect to the total weight of constituents in the effect module, with a pigment to binder ratio of 0.02 : 1 to 10 : 1, with respect to the weight of solids, and the pH is 7.2 to 8.0 and
B) at least one aqueous binder module which contains one or more anionic and/or non-ionic stabilized water-dilutable binders, water and optionally one or more organic solvents, one or more cross-linking agents and/or conventional lacquer additives,
are mixed with each other.

2. Process according to claim 1, **characterized in that** an effect module A) is used which contains metallic pigments and/or interference pigments as effect pigments.

3. Process according to claim 1, **characterized in that** the effect module contains metallic pigments which are based on water-sensitive metals, such as aluminium and steel.

4. Process according to claim 1 or 3, **characterized in that** an effect module is used which is based on one or more anionic stabilized binder.

5. Process according to one of the preceding claims, **characterized in that** several effect modules are used which each contain the same binder or binder mixture.

6. Process according to one of the preceding claims, **characterized in that** one or more effect modules with a water content of at least 50 wt.% are used.

7. Process according to one of the preceding claims, **characterized in that** the effect module A) and/or the binder module B) contains one or more binders based on polyurethane resins.

8. Process according to one of the preceding claims, **characterized in that**, in addition to effect module A) and binder module B), the following are used:
C) at least one colour module which contains one or more pigments and/or fillers, one or more anionic and/or non-ionic stabilized water-dilutable binders, water, and optionally one or more organic solvents and/or conventional lacquer additives, and/or
D) at least one rheology module which contains one or more organic or inorganic agents for regulating the rheology and water, and optionally one or more anionic and/or non-ionic stabilized water-dilutable binders and/or one or more organic solvents, and/or
E) at least one cross-linking module which contains one or more cross-linking agents, and optionally one or more organic solvents, water, one or more anionic and/or non-ionic stabilized water-dilutable binders and/or conventional lacquer additives.

9. Process according to Claim 8, **characterized in that** the colour module C) has a solids content of 20 to 80 wt.%.

10. Process according to one of claims 8 or 9, **characterized in that** the cross-linking module E) contains one or more blocked isocyanates and/or one or more amino resins as cross-linking agents.

11. Process according to one of the preceding claims, **characterized in that** the modules are mixed in any ratio by weight and that the resulting surface coating agent contains less than 20 wt.% of organic solvent.

## Revendications

1. Procédé pour la préparation de revêtements aqueux avec effet optique adaptable, par mélange d'au moins deux modules aqueux pré-mélangés et stables au stockage, **caractérisé en ce qu'**on mélange ensemble
A) au moins un module d'effet aqueux contenant pigment(s) consistés d'un ou plusieurs pigment(s) d'effet, un ou plusieurs liant(s) pouvant être dilué(s) à l'eau, stabilisé(s), anionique(s) et/ou non ionique(s) à la base des polyuréthane résines, un ou plusieurs solvant(s) organique(s), au moins 20 % en masse d'eau, ainsi qu'éventuellement, des additifs de peinture traditionnels, et où le module d'effet contient exclusivement des pigments métalliques, dans lequel la teneur en pigments métalliques est comprise entre 3 et 13 % en masse sur la base de la masse totale des composants du module d'effet, selon un rapport entre pigment et liant compris entre 0,02;1 à 10:1, rapporté à la masse de solides et à une valeur de pH comprise entre 7,2 et 8 et
B) au moins un module de liant aqueux contenant un ou plusieurs liant(s) pouvant être dilué(s) à l'eau, stabilisé(s), anionique(s) et/ou non ionique(s), de l'eau, ainsi qu'éventuellement, un ou plusieurs solvant(s) organique(s), un ou plusieurs réticulant(s) et/ou additifs de peinture traditionnels.

2. Procédé selon la revendication 1, **caractérisé en ce qu'**on utilise un module d'effet A), qui contient en tant que pigments d'effet, des pigments métalliques et/ou des pigments d'interférence.

3. Procédé selon la revendication 1 , **caractérisé en ce que** le module d'effet contient des pigments métalliques sur la base de métaux sensibles à l'eau, tels que l'aluminium et l'acier.

4. Procédé selon la revendication 1 ou 3, **caractérisé en ce qu'**on utilise un module d'effet sur la base d'un ou de plusieurs liant(s) stabilisé(s) anionique(s).

5. Procédé selon l'une quelconque des revendications précédentes, **caractérisé en ce qu'**on travaille avec plusieurs modules d'effet, qui contiennent respectivement le même liant ou le même mélange de liants.

6. Procédé selon l'une quelconque des revendications précédentes, **caractérisé en ce qu'**on utilise un ou plusieurs module(s) d'effet, avec une teneur en eau minimum de 50 % en masse.

7. Procédé selon l'une quelconque des revendications précédentes, **caractérisé en ce que** le module d'effet A) et/ou le module de liant B) contient un ou plusieurs liant(s) sur la base de résines polyuréthane.

8. Procédé selon l'une quelconque des revendications précédentes, **caractérisé en ce qu'**on utilise, en sus du module d'effet A) et du module de liant B):
C) au moins un module de couleur contenant un ou plusieurs pigment(s) et/ou matière(s) de charge, un ou plusieurs liant(s) pouvant être dilué(s) à l'eau, stabilisé(s), anionique(s) et/ou non ionique(s), de l'eau, ainsi qu'éventuellement, un ou plusieurs solvant(s) organique(s) et/ou des additifs de peinture traditionnels, et/ou D) au moins un module de rhéologie contenant un ou plusieurs agent(s) de contrôle de la rhéologie organique(s) ou inorganique(s), et de l'eau, ainsi qu'éventuellement un ou plusieurs liant(s) pouvant être dilué(s) à l'eau, stabilisé(s), anionique(s) et/ou non ionique(s), et/ou un ou plusieurs solvant(s) organique(s), et/ou
D) au moins un module de réticulant contenant un ou plusieurs agent(s) réticulant(s), ainsi qu'éventuellement, un ou plusieurs solvant(s) organique(s), de l'eau, un ou plusieurs liant(s) pouvant être dilué(s) à l'eau, stabilisé(s), anionique(s) et/ou non ionique(s), et/ou des additifs de peinture traditionnels.

9. Procédé selon la revendication 8, **caractérisé en ce que** le module de couleur C) présente une teneur en solides comprise entre 20 et 80 % en masse.

10. Procédé selon la revendication 8 ou 9, **caractérisé en ce que** le module de réticulant E) contient en tant qu'agent réticulant un ou plusieurs isocyanate(s) bloqué(s) et/ou une ou plusieurs résine(s) aminoplaste(s).

11. Procédé selon l'une quelconque des revendications précédentes, **caractérisé en ce qu'**on mélange les modules selon des rapports de quantité tels, que le revêtement obtenu contient moins de 20 % en masse de solvant organique.
